# EUROPÄISCHE PATENTANMELDUNG

(11) **EP 2 264 685 A1**
(43) Veröffentlichungstag der Anmeldung: **22.12.2010**
(21) Anmeldenummer: 08779151.3
(22) Anmeldetag: 21.04.2008
(51) Int. Cl.: G09B 19/06

(54) **VERFAHREN ZUR ENTWICKLUNG VON FERTIGKEITEN IM BEHALTEN VON WÖRTERN**

(30) Priorität: 25.12.2007 RU 2007147770
(71) Anmelder: Vasil'ev, Vladimir Urievich, Ul. Voznesenskaya, 33 Sergiev-Posad Moskovskaya obl. 141300 (RU)
(72) Erfinder: VASIL'EVA, Ekaterina Evgen'evna, Moskovskaya obl. 141300 (RU)
(74) Vertreter: Jeck, Anton
(86) Internationale Anmeldenummer: PCT/RU2008/000244
(87) Internationale Veröffentlichungsnummer: WO 2009/082259

(57) **Zusammenfassung**

Die Erfindung betrifft Lernmittel zum Trainieren der Angewöhnung des beschleunigten Behaltens von Wörtern einer fremden Sprache und der Muttersprache. Das Verfahren gemäß der Erfindung schließt die Bildung einer Basis ein, auf der jedes zu behaltende Wort auf einem individuellen Papierträger in einer Reihenfolge dargestellt wird, die Folgendes aufweist: die Übersetzung des Worts in eine Muttersprache (sinngemäß), das Wort selbst, das Wort oder die Kombination der Muttersprachen-Wörter, deren Aussprache dem zu behaltenden Wort ähnelt, und eine Figur, im Wesentlichen in Form eines Bilds, das in zusammengesetzter und assoziativer Form die Übersetzung des zu behaltenden Worts in eine Muttersprache (sinngemäß) mit dem Wort oder der Kombination der Muttersprachen-Wörter kombiniert, deren Aussprache dem zu behaltenden Wort ähnelt. Beim Lernen wird der für das Behalten komplizierteste Lernstoff auf dem Bild mit einer intensiven Farbe markiert und das zu behaltende Wort gleichzeitig wiederholt ausgesprochen. Das zu behaltende Wort wird **dadurch** viele Male wiederholt, dass das Wort abwechselnd vorgelesen, ins Gedächtnis in Form des ihm entsprechenden Bilds zurückgerufen und das Wort aufgrund der Aussprache und der Übersetzung (sinngemäß) des Worts wiedergegeben wird und danach die Übersetzung (sinngemäß) des Worts vorgelesen wird, wobei die der Übersetzung entsprechende Zeichnung im Gedächtnis zurückgerufen wird, aufgrund deren das zu behaltende Wort selbst, seine Aussprache und Schreibweise wiedergegeben werden.

## Beschreibung

Die Erfindung betrifft Unterrichtsmittel und zwar ein Verfahren zur Entwicklung von stabilen Fertigkeiten zum schnellen Behalten von Fremdwörtern und Wörtern der Muttersprache und kann im Lernprozess als praktisches methodisches Hilfsmittel zum Erlernen einer Fremd- bzw. der Muttersprache eingesetzt werden.

Aus dem Stand der Technik ist ein Verfahren zur Erarbeitung des Wortschatzes bei Lernenden bekannt, das die Anwendung von Demonstrationsmitteln durch die Lernenden in Form eines von ihnen erstellten Satzes kleiner orthografischer Wörterbücher vorsieht. Dabei machen sich die Lernenden im Voraus außerhalb des Unterrichts mit dem Inhalt eines oder mehrerer der von ihnen zusammengestellten kleinen Wörterbücher bekannt, indem sie Wörter vorlesen und jeden Laut gemäß seiner Schreibweise aussprechen. Im Unterricht schreiben die Lernenden die Wörter auf, mit denen sie sich kurz zuvor bekannt gemacht haben. Sie diktieren die Wörter sich selbst, wobei sie diese Wörter richtig aussprechen. Sie besprechen die Aussprache dieser Wörter, die Schreibweise, die morphologische Struktur, die grammatikalischen Eigenheiten, die semantische Bedeutung und die Fehler, die beim Gebrauch dieser Wörter begangen werden. Sie bilden aus diesen Wörtern andere Wortarten bzw. Wortgefüge oder Sätze. Danach machen sich die Lernenden außerhalb des Unterrichts mit dem Inhalt derselben Kleinwörterbücher erneut bekannt (s. RU 2 143 747). Dieses Verfahren zielt auf die schnelle Erarbeitung eines Wortschatzes ab, wobei zugleich die Lese- und Schreibkundigkeit und das Allgemeinwissen der Lernenden erhöht werden. Gleichzeitig verlangt dieses Verfahren von den Lernenden beträchtliche Willensanstrengungen, denn diesem Verfahren liegt eine mechanische Wiederholung zugrunde. Das Behalten selbst weist dabei keine schöpferische Komponente auf, insbesondere im Hinblick auf bildhaftes Denken und assoziative Wahrnehmung.

Bekannt ist ein Verfahren zum Beibringen von Lese- und Schreibfertigkeiten, das in der Anwendung eines Satzes von Platten mit ganzen Gestalten besteht. Diese stellen Abbildungen dar, die zuvor in sinnbildende Teile des Gesamten, in Wörter, geteilt wurden. Im Nachhinein bilden die Lernenden Wörter nach einer durch die gesamte Gestalt vorgegebene Reihenfolge von Symbolen. Diese Symbole stellen auf mehreren Platten einen oder mehrere Buchstaben des Alphabets dar, wobei in die sinnbildenden Teile des Gesamten Silben aufgenommen werden. Die Symbole stellen zusätzlich einen Teil von irgendeinem Gegenstand oder Lebewesen dar und tragen die Information über den phonetischen Inhalt des Zeichens, darunter auch Silben, über die Phoneme der Sprache und Regeln der Rechtschreibung. Nach der Wiederherstellung der ganzen Gestalt aus den oben beschriebenen Teilen sehen sich die Lernenden die zusammengestellten ganzen Kopien der Texte und Gestalten zum Erkennen und Einprägen mehrmals an, lesen sie und hören sie sich an (s. RU 2 119 191).

Der Vorteil dieses Verfahrens besteht darin, dass die Effektivität des Unterrichts gesteigert wird, wobei solche Fertigkeiten wie Lesegewandtheit und Rechtschreibung in kurzer Zeit beigebracht werden. Das bekannte Verfahren offenbart jedoch keine Beschreibung des Mechanismus der Beeinflussung und der Anwendung einer Abbildung eines Gegenstands bzw. eines Lebewesens bei der Einprägung eines Wortes, geschweige denn bei der Entwicklung einer Fertigkeit.

Bekannt ist ein Verfahren im Fremdsprachenunterricht, das einen Grundumfang in Form einer Datenbank für Wörter der zu erlernenden Sprache definiert, zusammengestellt aufgrund der Häufigkeitsanalyse der Verwendung von gebräuchlichen Wörtern. Zugrunde gelegt werden dabei am Anfang des Erlernens internationale Wörter, die den entsprechenden Wörtern der Muttersprache des Lernenden in der Aussprache annähernd gleichen und eine ähnliche Bedeutung haben. Die ermittelten Wörter werden in Form einer Tabelle bzw. mehrerer Tabellen auf Papierträgern dargestellt. Internationale Wörter werden dabei dadurch hervorgehoben, dass sie mit einer anderen Farbe als die restlichen Wörter geschrieben werden (s. RU 2 150 147). Der technische Effekt der Ausführung der bekannten Erfindung besteht in der Erhöhung der Anschaulichkeit des Erlernens, indem Relativgrößen wiedergegeben werden. Das angeführte bekannte Verfahren wurde als nächstliegender Stand der Technik in Bezug auf die technische Lehre, das erreichte Ergebnis und die Gesamtheit von erfindungswesentlichen Merkmalen der vorliegenden Erfindung zum Prototyp gewählt. Die Unmöglichkeit, mit Hilfe dieses Verfahrens die Fertigkeit zur schnellen Einprägung der Wörter zu erarbeiten, wird als Mangel des Prototyps angesehen. Der geistigen Komponente der Einprägung eines Wortes liegt die assoziative Gestalt des Wortes zugrunde. Eben das fehlt bei der Einprägung der Wörter gemäß diesem Verfahren. Darüber hinaus enthält das bekannte Verfahren keine Beschreibung des Algorithmus zur Anwendung von Tabellen mit den Wörtern des Grundumfangs, die zum Erwerb der Fertigkeit dienen. Die angeführten Nachteile des Prototyps schränken dessen wirksamen Anwendungsbereich ein, weshalb dieser Prototyp für die Ziele der vorliegenden Erfindung nicht eingesetzt werden kann.

Der vorliegenden Erfindung liegt als Ziel die Erreichung eines technischen Effekts zugrunde, der in der Folge in der beschleunigten Entwicklung einer stabilen Fertigkeit des Menschen zum schnellen Behalten einer großen Menge von Fremdwörtern, Fachwörtern bzw. schwer zu behaltenden Wörtern der Muttersprache besteht. Dabei wird die Möglichkeit sichergestellt, dass diese Wörter in der Folge ins Gedächtnis zurückgerufen oder mündlich bzw. schriftlich, d. h. deren Schreibweise, Aussprache, Übersetzung oder Sinn, wiedergegeben werden können. Im Endeffekt ermöglicht der beschriebene technische Effekt, Zeitkosten sowie intellektuelle Anstrengungen des Menschen beim Erlernen einer Fremdsprache wesentlich zu reduzieren und den Wortschatz des Lernenden zu bereichern. Dabei wurden im vorliegenden Verfahren die positiven Eigenschaften des Prototyps maximal aufrechterhalten, darunter die Anwendung der sprachlichen Gestalt in Form von Wörtern, die durch deren grafische Abbildungen ersetzt werden.

Der angegebene positive Effekt wird dadurch erreicht, dass das Verfahren zur Entwicklung von Fertigkeiten im Behalten von Wörtern die Erzeugung von einem Grundumfang der zu behaltenden Wörter und deren Erlernen einschließt. Dabei werden die Wörter aus dem Basisumfang auf Papierträgern grafisch dargestellt, darunter auch Wortgestalten mit den ausgewählten Wörtern der Muttersprache, die in der Aussprache den zu behaltenden Wörtern gleichen. Beim Erlernen wird der zu erlernende Lernstoff durch verschiedene Farben hervorgehoben. Visuelle Einprägung und mehrfache Wiederholung des zu erlernenden Stoffs unterscheidet sich von dem Offenbarten im Prototyp dadurch, dass während der Erstellung des Grundumfangs jedes zu behaltenden Wortes auf einem selbständigen (getrennten) Papierträger in einer Reihenfolge dargestellt wird, die die Übersetzung (sinngemäß) dieses Wortes in die Muttersprache, das Wort selbst, das Wort oder eine Kombination aus Wörtern der Muttersprache, die ähnlich dem zu behaltenden Wort ausgesprochen werden, die Gestalt, vorwiegend in Form einer Zeichnung, einschließt. Beim Hervorheben muss darauf geachtet werden, dass der für die Einprägung komplizierteste Lernstoff in der Zeichnung in einer intensiveren Farbe dargestellt wird. Gleichzeitig damit wird das zu behaltende Wort mehrmals ausgesprochen. Die Wiederholung des zu behaltenden Wortes erfolgt, indem das Wort abwechselnd gelesen, ins Gedächtnis in Form der ihm entsprechenden Zeichnung zurückgerufen und aufgrund dessen ausgesprochen und übersetzt (sinngemäß) wird. Danach wird die Übersetzung (sinngemäß) des Wortes gelesen, wobei im Gedächtnis die dem Wort entsprechende Zeichnung zurückgerufen und aufgrund dessen das zu behaltende Wort selbst, seine Aussprache und Schreibweise wiedergegeben werden.

Gemäß dem Verfahren wird die Gestalt vorwiegend als eine Zeichnung dargestellt, die die Übersetzung (sinngemäß) des zu behaltenden Wortes in die Muttersprache und das Wort oder die Kombination aus den damit ähnlich auszusprechenden Wörtern der Muttersprache kompositorisch und assoziativ vereinigt. In allen Fällen der Ausführung des Verfahrens wird bei der Erstellung des Grundumfangs jedes zu behaltende Wort auf einem getrennten Papierträger in der Reihenfolge dargestellt, die zusätzlich durch die Transkription des Wortes und einen kurzen, die Wortgestalt aufschließenden Satz in die Muttersprache erweitert ist.

Dem entwickelten Verfahren zur Entwicklung von Fertigkeiten im Behalten von Wörtern liegen Grundsätze der Theorie der etappenweisen Ausbildung geistiger Handlungen zugrunde. Das Verfahren stellt einen Algorithmus zur Gedächtniseinprägung dar, der sich nach einem einmaligen Erlernen und einer nachfolgenden mehrmaligen, bewussten Anwendung im Lernprozess durch die Lernenden zu einer stabilen, unbewussten Vorgangsweise entwickelt. Das vom Erfinder entwickelte Verfahren ist im vorliegenden Fall als Objekt der Erfindung kein Verfahren zur geistigen Aktivität des Lernenden oder des Lehrers, sondern ein Mittel, einem Menschen eine (Fremd-)Sprache beizubringen. Dieses kann in Form eines Lehrmittels auf Papierträgern ausgeführt werden, um auf die Wahrnehmungsorgane des Menschen einzuwirken. An der Spitze des Verfahrens zur Entwicklung von Fertigkeiten im Behalten von Wörtern steht das Prinzip der Ergänzung der visuell-motorischen Gedächtniseinprägung der Gestalt. Die beschleunigte Einprägung eines bedeutenden Umfangs von unbekannten russischen und besonders von fremdsprachigen Wörtern mit der Absicht, diese weiterhin korrekt aussprechen und schreiben zu können, stellt für einen Menschen mit Durchschnittsfähigkeiten eine komplizierte Aufgabe dar. Ohne entsprechende Fähigkeiten zu besitzen, kann eine solche Aufgabe zu einer nicht ausführbaren werden. Das vorliegende Verfahren ermöglicht es, fast bei jedem Menschen eine stabile und zu einer unbewussten Vorgangsweise gewordene Fähigkeit zum beschleunigten Behalten einiger tausend Wörter in kurzer Zeit zu entwickeln.

Das Verfahren besteht aus einem Algorithmus zur Erstellung des Grundumfangs der zu behaltenden Wörter sowie zum Erlernen, zur visuellen Einprägung und mehrfachen Wiederholung des Lernstoffs. Der Basisumfang ist sowohl für die Entwicklung der Fertigkeit als auch für die Erweiterung des Wortschatzes notwendig. Der Basisumfang der zu behaltenden Wörter einer Fremdsprache wird aufgrund der Häufigkeitsanalyse der Verwendung von gebräuchlichen Wörtern ermittelt, während die Erstellung des Basisumfangs der zu behaltenden Wörter der Muttersprache zielbezogen ist. Bei der Erstellung des Grundumfangs wird eine Gesamtheit von Papierträgern erzeugt, auf denen jeweils ein zu behaltendes Wort dargestellt ist. Im Laufe der Entwicklung der Fertigkeit kann der Grundumfang durch neue Papierträger mit den zu behaltenden Wörtern ergänzt werden. Die Schlüsselrolle auf jeder Stufe der Entwicklung der Fertigkeit spielt die in Form einer Zeichnung dargestellte Gestalt des zu behaltenden Wortes. In der Stufe der Erstellung des Grundumfangs wird bei dem Lernenden durch die Zeichnung die Fertigkeit des assoziativen bildhaften Denkens erarbeitet. Während des Lernvorgangs, insbesondere beim Hervorheben in der Zeichnung des für das Behalten kompliziertesten Lernstoffs durch eine auffallende Farbe, spielt die Zeichnung die Rolle eines Verbindungselements zwischen der Schreibweise des Wortes, seiner Aussprache, seinem Sinn bzw. seiner Übersetzung, die nach dem Prinzip "Ort, Handlungsperson, Situation" mit Hilfe eines Wortes oder Wortgefüges der Muttersprache kompositorisch und assoziativ vereinigt sind und eine mit dem zu behaltenden Wort ähnliche Aussprache haben. Schließlich dient die Zeichnung in der Wiederholungsstufe als eine Art Doppelbrücke, mit deren Hilfe durch das Lesen des zu behaltenden Wortes dessen Aussprache und Übersetzung (sinngemäß) ins Gedächtnis zurückgerufen werden oder umgekehrt.

In der Anfangsstufe des Lernprozesses ist es zweckmäßig, die Zeichnung durch einen kurzen, die Wortgestalt aufschließenden Satz in der Muttersprache zu ergänzen, um das Erfassen der Situation zu beschleunigen und eine Selbstkontrolle zu ermöglichen. Als ein wichtiger Faktor, der zur Entwicklung der Fertigkeit zum Behalten der Wortaussprache beiträgt, wird das Einschließen der Worttranskription in die das zu behaltende Wort darstellende Reihenfolge auf einem getrennten Papierträger angesehen. Das Hervorheben des für das Behalten kompliziertesten Lernstoffs in der Zeichnung durch eine intensive Farbe verschärft die bildhafte Wahrnehmung des Lernstoffs.

Somit sind alle sich vom Prototyp unterscheidenden Merkmale des Verfahrens zur Entwicklung von Fertigkeiten im Behalten von Wörtern, sowohl die allgemeinen als auch die speziellen, auf die Erreichung des technischen Effekts zugeschnitten und zwar auf die beschleunigte Entwicklung einer stabilen Fertigkeit des Menschen im schnellen Behalten einer großen Menge von Fremdwörtern, Fachwörtern bzw. schwer zu behaltenden Wörtern der Muttersprache. Dabei wird die Möglichkeit sichergestellt, dass diese Wörter in der Folge ins Gedächtnis zurückgerufen oder mündlich bzw. schriftlich, d. h. deren Schreibweise, Aussprache, Übersetzung oder Sinn, wiedergegeben werden können.

Die durch die vorstehende Gesamtheit wesentlicher Merkmale gekennzeichnete technische Lösung ist neu, gewerblich anwendbar und weist die nötige Erfindungshöhe auf.

Die technische Lösung wird anhand von einigen in den Zeichnungen dargestellten Ausführungsbeispielen näher erläutert. Es zeigen:
- Fig. 1: Ausführungsbeispiel eines Papierträgers aus dem Grundumfang von zu behaltenden englischen Wörtern;
- Fig. 2: Papierträger nach Fig.1 mit einem dargestellten und hervorgehobenen Lernstoff;
- Fig. 3: Ausführungsbeispiel eines Papierträgers aus dem Grundumfang von zu behaltenden deutschen Wörtern;
- Fig. 4: Papierträger nach Fig. 3 mit einem dargestellten und hervor- gehobenen Lernstoff;
- Fig. 5: Ausführungsbeispiel eines Papierträgers aus dem Grundumfang von zu behaltenden französischen Wörtern;
- Fig. 6: Papierträger nach Fig. 5 mit dem dargestellten und hervorgehobenen Lernstoff;
- Fig. 7: Ausführungsbeispiel eines Papierträgers aus dem Grundumfang von zu behaltenden russischen Wörtern;
- Fig. 8: Papierträger nach Fig. 7 mit dem dargestellten und hervorgehobenen Lernstoff.

Die Realisierbarkeit des Verfahrens zur Entwicklung der Fertigkeit im Behalten von Wörtern bei einem Menschen mit Russisch als Muttersprache wird anhand von folgenden Beispielen belegt.

### Beispiel 1: Behalten von englischen Wörtern

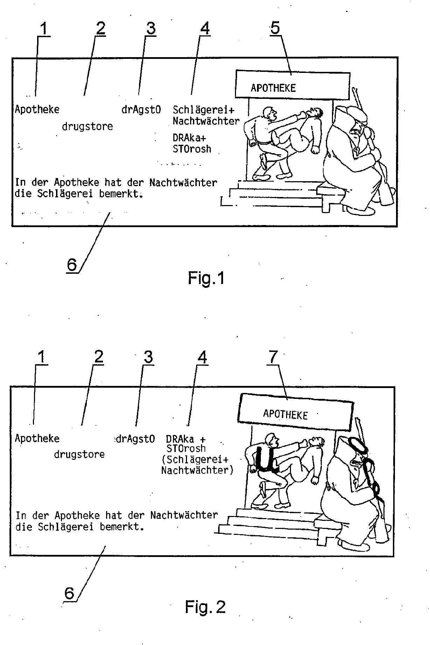

Ein Element des im Voraus zusammengestellten Grundumfangs von zu behaltenden englischen Wörtern in Form eines getrennten Blatt Papiers (einer Karteikarte) für das Beispielwort " 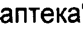 " ("apteka" - "Apotheke") - "drugstore" ist in Fig. 1 dargestellt. In Fig. 1 ist das englische Wort in einer Reihenfolge dargestellt, wobei die Bezugszeichen Folgendes bedeuten:
1 die Übersetzung des fremdsprachigen (englischen) Wortes in die Muttersprache;
2 das fremdsprachige (englische) Wort selbst, dessen Schreibweise auf Englisch;
3 die Aussprache des fremdsprachigen (englischen) Wortes, dessen internationale und russische Transkription;
4 die Wörter der Muttersprache, die eine mit dem zu behaltenden Wort ähnliche Aussprache haben (der gleichlautende Teil ist durch Großbuchstaben hervorgehoben);
5 die Gestalt in Form einer Zeichnung, die kompositorisch und assoziativ die russische Übersetzung des zu behaltenden Wortes mit der Wortgruppe in der Muttersprache mit einer ähnlichen Aussprache vereinigt;
6 ein kurzer Satz auf Russisch, der die Gestalt (die Zeichnung) aufschließt.

Mit der vorliegenden Karteikarte wird folgendermaßen gearbeitet:

Es wird die Übersetzung 1 " 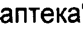 " ("apteka") gelesen, unter dem Bezugszeichen 5 (Zeichnung) wird die entsprechende Gestalt gefunden und mit verschiedenen Farben bemalt. Um die Suche zu erleichtern, wird die Übersetzung links angeordnet. Sie kann hinsichtlich anderer Teile der Zeichnung hervorgehoben sein.

Es wird die Übersetzung des englischen Wortes unter dem Bezugszeichen 3 vorgelesen: ['drAgstO:], danach unter dem Bezugszeichen 4 das gleichlautende russische Wort bzw. gleichlautende russische Wörter: " 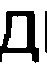 PA 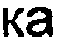 + CTOpo 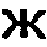 " ("DRAka + STOrosh" - "Schlägerei" + "Nachtwächter") und anschließend der Satz unter dem Bezugszeichen 6, der die Zeichnung wiedergibt. Dabei wird nach der Gestalt bzw. den Gestalten des gleichlautenden russischen Wortes bzw. der Wörter unter dem Bezugszeichen 5 (Zeichnung) gesucht. Gleichzeitig wird bzw. werden unter 5 das gleichlautende russische Wort bzw. die Wörter bemalt und die Aussprache des englischen Wortes unter 3: ['drAgstO:] mehrmals geübt. Auf einem weißen Blatt Papier wird das englische Wort unter 2 mehrfach aufgeschrieben, wodurch die Schreibweise des englischen Wortes unter 3 geübt wird. Zugleich wird das Wort unter 3 laut ausgesprochen. Auf der Karteikarte wird alles bis auf die Übersetzung des englischen Wortes unter 1 zugedeckt; diese Übersetzung wird vorgelesen. Die Zeichnung unter 5 wird ins Gedächtnis zurückgerufen, das englische Wort unter 3 wird laut ausgesprochen. Danach wird die Karteikarte aufgedeckt und die Richtigkeit kontrolliert. Daraufhin wird auf der Karteikarte alles bis auf das englische Wort unter 2 zugedeckt, und das englische Wort unter 2 wird gemäß seiner Schreibweise vorgelesen. Die Zeichnung unter 5 wird ins Gedächtnis zurückgerufen, und die Übersetzung des englischen Wortes unter 1 wird genannt. Danach wird die Karteikarte aufgedeckt, und die Richtigkeit wird kontrolliert. Um die Einprägung der Schreibweise des englischen Wortes zu beschleunigen, wird in der Zeichnung unter 5 der für das Behalten komplizierte Buchstabe bzw. die Buchstabengruppe, die der Form nach dem Element der Zeichnung ähnlich ist, durch eine intensive Farbe hervorgehoben (durchgezeichnet). Gleichzeitig wird das englische Wort unter 3 laut ausgesprochen. In Fig. 2 ist die Karteikarte mit der Zeichnung 7 dargestellt, in der die für das Behalten komplizierten Buchstaben bzw. Buchstabengruppen bereits durchgezeichnet ist bzw. sind. Im vorliegenden Fall sind es der Buchstabe "u" und die Buchstabengruppe "ore". Die Betrachtung der Zeichnung unter 7 ermöglicht, die Schreibweise des englischen Wortes unter 2 wiederzugeben, wobei die Zeichnung unter 7 als Grundlage dazu dient.

### Beispiel 2: Behalten von deutschen Wörtern

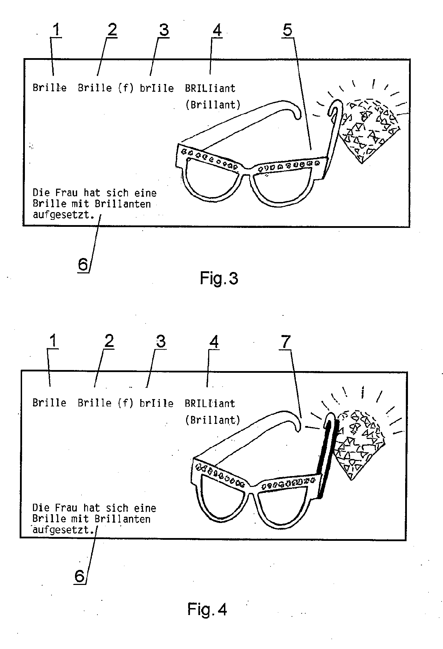

Eine der Besonderheiten im Deutschen ist die Movierung von Substantiven, d. h. die Spezifizierung des Geschlechts (Femininum [f], Maskulinum [m], Neutrum [n]) der Substantive. Das Element aus dem im Voraus zusammengestellten Grundumfang von zu behaltenden deutschen Wörtern ist in Fig. 3 in Form eines getrennten Papierbogens (Karteikarte) anhand des Wortes "Brille" (f) dargestellt. In Fig. 3 ist das deutsche Wort in einer Reihenfolge dargestellt, wobei die Bezugszeichen Folgendes bedeuten:
1 die Übersetzung des fremdsprachigen (deutschen) Wortes in die Muttersprache (ins Russische);
2 das fremdsprachige (deutsche) Wort selbst und dessen Schreibweise auf Deutsch mit Angabe des Geschlechts des Substantivs;
3 die Aussprache des fremdsprachigen (deutschen) Wortes in seiner russischen Transkription;
4 die Wörter der Muttersprache, die eine mit dem zu behaltenden Wort ähnliche Aussprache haben (im vorliegenden Fall ist es ein Wort, dessen gleichlautender Teil durch Großbuchstaben hervorgehoben ist);
5 die Gestalt in Form einer Zeichnung, die kompositorisch und assoziativ die russische Übersetzung des zu behaltenden Wortes mit dem Wort der Muttersprache mit einer ähnlichen Aussprache vereinigt;
6 ein kurzer Satz auf Russisch, der die Gestalt (die Zeichnung) aufschließt.

Mit der beschriebenen Karteikarte wird folgendermaßen gearbeitet:

Es wird die Übersetzung 1 "o 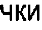 " ("otschki" - "Brille") gelesen. In der Zeichnung unter 5 wird die entsprechende Gestalt gefunden und mit verschiedenen Farben bemalt. Um die Suche zu erleichtern, wird die Übersetzung links angeordnet. Sie kann hinsichtlich anderer Teile der Zeichnung hervorgehoben sein. Es wird die Übersetzung des deutschen Wortes unter 3 vorgelesen: ['brille], danach das gleichlautende russische Wort unter 4: " 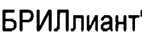 " ("BRILliant") und anschließend der Satz unter 6, der die Zeichnung und das Geschlecht dieses Substantivs (f) wiedergibt. Dabei wird in der Zeichnung unter 5 nach der Gestalt des gleichlautenden russischen Wortes gesucht. Gleichzeitig wird in der Zeichnung unter 5 das gleichlautende russische Wort bemalt und die Aussprache des deutschen Wortes unter 3: ['brille] mehrmals geübt. Auf einem weißen Blatt Papier wird das deutsche Wort unter 2 mehrfach aufgeschrieben, wodurch die Schreibweise und zugleich die Aussprache des deutschen Wortes unter 3 geübt werden. Auf der Karteikarte wird alles bis auf die Übersetzung des deutschen Wortes 1 zugedeckt. Diese Übersetzung wird vorgelesen. Die Zeichnung unter 5 wird ins Gedächtnis zurückgerufen, das deutsche Wort unter 3 wird laut ausgesprochen. Danach wird die Karteikarte aufgedeckt, und die Richtigkeit wird kontrolliert. Anschließend wird auf der Karteikarte alles bis auf das deutsche Wort unter 2 zugedeckt. Das deutsche Wort unter 2 wird gemäß seiner Schreibweise vorgelesen, die Zeichnung unter 5 wird ins Gedächtnis zurückgerufen, und die Übersetzung des deutschen Wortes unter 1 wird genannt. Danach wird die Karteikarte aufgedeckt, und die Richtigkeit wird kontrolliert. Um die Einprägung der Schreibweise des deutschen Wortes zu beschleunigen, wird in der Zeichnung unter 5 der für das Behalten komplizierte Buchstabe bzw. die Buchstabengruppe, die der Form nach dem Element der Zeichnung ähnlich ist, durch eine intensive Farbe hervorgehoben (durchgezeichnet). Gleichzeitig wird das deutsche Wort unter 3 laut ausgesprochen. In Fig. 4 ist die Karteikarte mit der Zeichnung unter 7 dargestellt, in der die für das Behalten komplizierten Buchstaben bzw. Buchstabengruppen bereits durchgezeichnet sind. Im vorliegenden Fall sind es die Buchstaben "i" und "l" und deren Kombination. Die Betrachtung der Zeichnung unter 7 ermöglicht, die Schreibweise des deutschen Wortes unter 2 wiederzugeben, wobei die Zeichnung unter 7 als Grundlage dazu dient.

### Beispiel 3: Behalten von französischen Wörtern

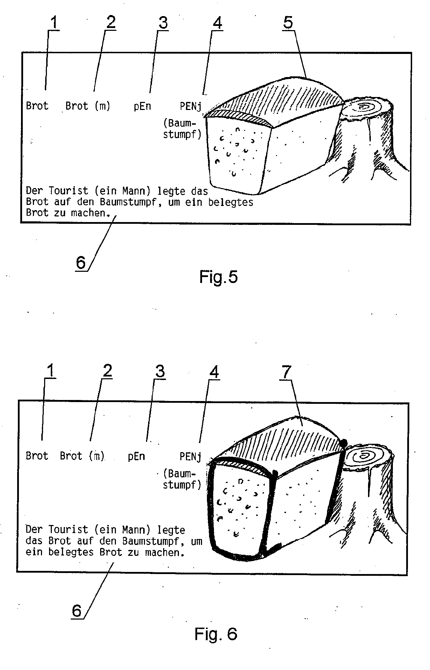

Eine der Besonderheiten im Französischen ist die Movierung der Substantive, d. h. die Spezifizierung des Geschlechts (Femininum [f], Maskulinum [m], Neutrum [n]) des Substantivs. Das Element aus dem im Voraus erstellten Grundumfang von zu behaltenden französischen Wörtern ist in Fig. 5 in Form eines getrennten Papierbogens (Karteikarte) anhand des Wortes "pain" (m) (Brot) dargestellt. In Fig. 5 ist das französische Wort in einer Reihenfolge dargestellt, wobei die Bezugszeichen Folgendes bedeuten:
1 die Übersetzung des fremdsprachigen (französischen) Wortes in die Muttersprache (ins Russische);
2 das fremdsprachige (französische) Wort selbst und dessen Schreibweise auf Französisch mit der Angabe des Geschlechts des Substantivs (m);
3 die Aussprache des fremdsprachigen (französischen) Wortes in seiner russischen Transkription;
4 die Wörter der Muttersprache, die eine mit dem zu behaltenden Wort ähnliche Aussprache haben (im vorliegenden Fall ist es ein Wort, dessen gleichlautender Teil durch Großbuchstaben hervorgehoben ist);
5 die Gestalt in Form einer Zeichnung, die kompositorisch und assoziativ die russische Übersetzung des zu behaltenden Wortes mit dem Wort der Muttersprache mit einer ähnlichen Aussprache vereinigt;
6 ein kurzer Satz auf Russisch, der die Gestalt (die Zeichnung) aufschließt.

Mit der beschriebenen Karteikarte wird folgendermaßen gearbeitet:

Es wird die Übersetzung unter 1: " 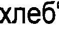 " ("chleb" - "Brot") gelesen, in der Zeichnung unter 5 wird die entsprechende Gestalt gefunden und mit verschiedenen Farben bemalt. Um die Suche zu erleichtern, wird die Übersetzung links angeordnet. Sie kann hinsichtlich anderer Teile der Zeichnung hervorgehoben sein. Es wird die Übersetzung des französischen Wortes unter 3 vorgelesen: ['pEn], danach das gleichlautende russische Wort unter 4: "PENj" ("Baumstumpf") und anschließend der Satz unter 6, der die Zeichnung und das Geschlecht dieses Substantivs (m) wiedergibt. Dabei wird nach der Gestalt des gleichlautenden russischen Wortes in der Zeichnung unter 5 gesucht. Gleichzeitig wird in der Zeichnung unter 5 das gleichlautende russische Wort bemalt und die Aussprache des französischen Wortes unter 3: ['pEn] mehrmals geübt. Auf einem weißen Blatt Papier wird das französische Wort unter 2 mehrfach aufgeschrieben, wodurch die Schreibweise und zugleich die Aussprache des französischen Wortes unter 3 geübt werden. Auf der Karteikarte wird alles bis auf die Übersetzung des französischen Wortes 1 zugedeckt, und diese Übersetzung wird vorgelesen. Die Zeichnung unter 5 wird ins Gedächtnis zurückgerufen. Das französische Wort unter 3 wird ausgesprochen. Danach wird die Karteikarte aufgedeckt, und die Richtigkeit wird kontrolliert. Anschließend wird auf der Karteikarte alles bis auf das französische Wort unter 2 zugedeckt, das französische Wort 2 wird gemäß seiner Schreibweise vorgelesen, die Zeichnung unter 5 wird ins Gedächtnis zurückgerufen, und die Übersetzung des französischen Wortes unter 1 wird genannt. Danach wird die Karteikarte aufgedeckt, und die Richtigkeit wird kontrolliert. Um die Einprägung der Schreibweise des französischen Wortes zu beschleunigen, wird in der Zeichnung unter 5 der für das Behalten komplizierte Buchstabe bzw. die Buchstabengruppe, die der Form nach dem Element der Zeichnung ähnlich ist, durch eine intensive Farbe hervorgehoben (durchgezeichnet). Gleichzeitig wird das französische Wort unter 3 laut ausgesprochen. In Fig. 6 ist die Karteikarte mit der Zeichnung unter 7 dargestellt, in der die für das Behalten komplizierten Buchstaben bzw. Buchstabengruppen bereits durchgezeichnet sind. Im vorliegenden Fall sind es die Buchstaben "a" und "i" und deren Kombination. Die Betrachtung der Zeichnung unter 7 in Fig. 6 ermöglicht, die Schreibweise des französischen Wortes unter 2 wiederzugeben, wobei die Zeichnung unter 7 als Grundlage dazu dient.

### Beispiel 4: Behalten von russischen Wörtern

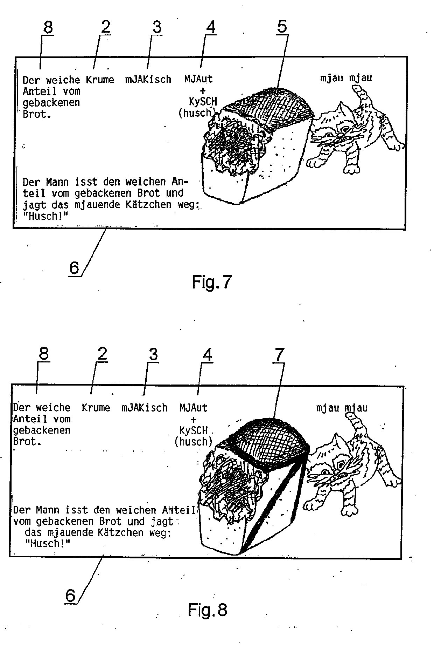

Eine der Besonderheiten im Russischen ist die Movierung der Substantive, d. h. die Spezifizierung des Geschlechts (Femininum [f], Maskulinum [m], Neutrum [n]) der Substantive. Das Element aus dem im Voraus erstellten Grundumfang von zu behaltenden russischen Wörtern ist in Fig. 5 in Form eines getrennten Papierbogens (Karteikarte) anhand des Wortes " 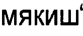 " (m) (Krume) dargestellt. In Fig. 7 ist das russische Wort in einer Reihenfolge dargestellt, wobei die Bezugszeichen Folgendes bedeuten:
1 Sinn des russischen Wortes;
2 das Wort selbst und dessen Schreibweise mit der Angabe des männlichen Geschlechts des Substantivs;
3 die Wortaussprache in seiner russischen Transkription;
4 die Wörter der Muttersprache, die eine mit dem zu behaltenden Wort ähnliche Aussprache haben (im vorliegenden Fall sind es zwei Wörter, deren gleichlautender Teil durch Großbuchstaben hervorgehoben ist);
5 die Gestalt in Form einer Zeichnung, die kompositorisch und assoziativ den Sinn des zu behaltenden Wortes mit den Wörtern der Muttersprache mit einer ähnlichen Aussprache vereinigt;
6 ein kurzer Satz auf Russisch, der die Gestalt (die Zeichnung) aufschließt.

Mit der beschriebenen Karteikarte wird folgendermaßen gearbeitet:

Es wird der Sinn des russischen Worts 8 ("der innere weiche Anteil von gebackenem Brot") vorgelesen. In der Zeichnung unter 5 wird die entsprechende Gestalt gesucht und mit verschiedenen Farben bemalt. Um die Suche zu erleichtern, wird der Sinn des Wortes 8 links angeordnet. Er kann hinsichtlich anderer Teile der Zeichnung hervorgehoben sein. Es wird die Aussprache des Wortes 3 gelesen: [' 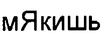 ] ("mJAkisch"), danach die gleichlautenden russischen Wörter unter 4: " 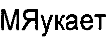 " + " 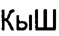 !" ("MIAut" + "huSCH") und anschließend der Satz unter 6, der die Zeichnung und das Geschlecht dieses Substantivs (m) wiedergibt. Dabei wird nach der Gestalt des gleichlautenden russischen Wortes in der Zeichnung unter 5 gesucht. Gleichzeitig wird in der Zeichnung unter 5 das gleichlautende russische Wort bemalt und die Aussprache unter 3 des russischen Wortes: [' 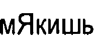 ] ("mJAkisch") mehrmals geübt. Auf einem weißen Blatt Papier wird das russische Wort unter 2 mehrfach aufgeschrieben, wodurch seine Schreibweise und zugleich die Aussprache des russischen Wortes unter 3 geübt werden. Auf der Karteikarte wird alles bis auf den Sinn des russischen Wortes unter 8 zugedeckt; das wird vorgelesen. Die Zeichnung unter 5 wird ins Gedächtnis zurückgerufen, das Wort unter 3 wird laut ausgesprochen. Danach wird die Karteikarte aufgedeckt, und die Richtigkeit wird kontrolliert. Anschließend wird auf der Karteikarte alles bis auf das Wort selbst unter 2 zugedeckt, und das Wort unter 2 wird gemäß seiner Schreibweise vorgelesen. Die Zeichnung 5 wird ins Gedächtnis zurückgerufen, und der Sinn des Wortes 8 wird genannt. Danach wird die Karteikarte aufgedeckt, und die Richtigkeit wird kontrolliert. Um die Einprägung der Schreibweise des russischen Wortes zu beschleunigen, wird in der Zeichnung unter 5 der für das Behalten komplizierte Buchstabe bzw. die Buchstabengruppe, die der Form nach dem Element der Zeichnung ähnlich ist, durch eine intensive Farbe hervorgehoben (durchgezeichnet). Gleichzeitig wird das Wort unter 3 laut ausgesprochen. In Fig. 8 ist die Karteikarte mit der Zeichnung unter 7 dargestellt, in der die für das Behalten komplizierten Buchstaben bzw. Buchstabengruppen bereits durchgezeichnet sind. Im vorliegenden Fall ist es der Buchstabe " 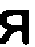 ". Die Betrachtung der Zeichnung unter 7 in Fig. 8 ermöglicht, die Schreibweise des Wortes unter 2 wiederzugeben, wobei die Zeichnung unter 7 als Grundlage dazu dient.

Die oben beschriebenen konkreten Ausführungsbeispiele des Verfahrens sind ausschließlich zum Zweck der Erläuterung der Erfindung angeführt. Ein sachkundiger Fachmann kann diese Beispiele verbessern bzw. alternative Ausführungsbeispiele im Rahmen der in der Beschreibung dargelegten Lehre der vorliegenden Erfindung vorschlagen.

Zu den Vorteilen der Erfindung gehören die Einfachheit und Erreichbarkeit eines stabilen Fertigkeitserwerbs zur Einprägung von Wörtern. Die Fertigkeit wird nach der Einprägung von einigen hundert Wörtern entwickelt, und zwar im Laufe von zehn Unterrichtsstunden. Das Verfahren ist für alle Alterskategorien von Lernenden ab jüngerem Schulalter geeignet und hat keine Gegenanzeigen.

## Patentansprüche

1. Verfahren zur Entwicklung von Fertigkeiten im Behalten von Wörtern, wobei das Verfahren die Erstellung eines Grundumfangs der zu behaltenden Wörter und deren Erlernen einschließt, wobei ferner die Erstellung des Grundumfangs in grafischer Form auf Papierträgern ausgeführt wird und Wortgestalten mit ausgewählten Wörtern der Muttersprache eingeschlossen sind, die in der Aussprache den zu behaltenden Wörtern gleichen, und wobei im Lernvorgang der Lernstoff in schriftlicher Form mit farblicher Hervorhebung dargestellt, visuell eingeprägt und mehrfach wiederholt wird,
**dadurch gekennzeichnet,**
**dass** während der Erstellung des Grundumfangs jedes zu behaltende Wort auf einem selbständigen Papierträger in einer Reihenfolge dargestellt wird, die die Übersetzung (sinngemäß) dieses Wortes in die Muttersprache, das Wort selbst, ein Wort oder eine Kombination aus Wörtern der Muttersprache, die dem zu behaltenden Wort ähnlich ausgesprochen werden, die Gestalt, vorwiegend in Form einer Zeichnung, einschließen, wobei beim Hervorheben darauf geachtet werden muss, dass der für das Behalten komplizierteste Lernstoff in der Zeichnung in einer intensiveren Farbe dargestellt und gleichzeitig das zu behaltende Wort mehrmals ausgesprochen wird sowie die Wiederholung des zu behaltenden Wortes erfolgt, indem das Wort abwechselnd vorgelesen, ins Gedächtnis in Form der ihm entsprechenden Abbildung zurückgerufen wird, aufgrund deren die Aussprache und die Übersetzung (sinngemäß) des Wortes wiedergegeben werden, und danach die Übersetzung (sinngemäß) des Wortes vorgelesen wird, wobei die der Übersetzung entsprechende Zeichnung ins Gedächtnis zurückgerufen wird, aufgrund deren das zu behaltende Wort selbst, seine Aussprache und Schreibweise wiedergegeben werden.

2. Verfahren nach Anspruch 1,
**dadurch gekennzeichnet,**
**dass** die Gestalt vorwiegend in Form einer Zeichnung ausgeführt wird, die die Übersetzung (sinngemäß) des zu behaltenden Wortes in die Muttersprache mit dem Wort bzw. Wortgefüge der Muttersprache, die eine ähnliche Aussprache aufweisen, kompositorisch und assoziativ vereinigt.

3. Verfahren nach Anspruch 1 oder 2,
**dadurch gekennzeichnet,**
**dass** bei der Erstellung des Grundumfangs jedes zu behaltende Wort auf einem getrennten Papierträger in einer Reihenfolge dargestellt wird, die zusätzlich die Worttranskription und einen kurzen, die Gestalt aufschließenden Satz in der Muttersprache einschließt.
